# EUROPEAN PATENT SPECIFICATION

(11) **EP 1 174 251 B1**
(45) Date of publication and mention of the grant of the patent: **31.08.2005**
(21) Application number: 01124008.2
(22) Date of filing: 23.06.1997
(51) Int. Cl.: B29C 73/16, B29C 73/24, B60C 17/00, B60C 19/00

(54) **Method of removing puncture sealing means from tyres**
Verfahren zur Entfernung von Dichtungsmittel aus einem Reifen
Procédé pour enlever les moyens d'étanchéité aux crevaisons d'un pneu

(30) Priority: 25.06.1996 DE 19625372
(43) Date of publication of application: 23.01.2002
(62) Divisional of application: 97304399.5
(73) Proprietor: SUMITOMO RUBBER INDUSTRIES LIMITED, Hyogo-ken (JP)
(72) Inventor: Gerreseheim, Manfred, 63179 Obertshausen-Hauser (DE); Steinbrecht, Ulrich, 74372 Ober-Ramstadt (DE); Fuchs, Hans-Bernd, 73655 Alzenau-Horstein (DE); Hubert, Hans, 63579 Freigericht (DE)
(74) Representative: Thul, Stephan

(56) References cited:
- FR-A- 2 072 683
- US-A- 2 222 047
- US-A- 3 986 520
- US-A- 4 811 796

## Description

The present invention relates to a method of removing puncture sealing preparations from tyres.

Sealing preparations are increasingly being used for tyres with punctures. They mainly contain colloidal dispersions of polymers in aqueous media. Thus, by way of example, polystyrene butadiene latexes, polyvinylacetate latexes and rubber latexes are used. Such sealing preparation is described in the German patent application 195 45 935.0, which contained natural rubber latex and an adhesive resin.

Following a tyre puncture the sealing preparation is sprayed into the tyre via the tyre valve and the tyre is pumped up to a specific pressure by means of a propellant gas or compressor. The tyre is then run for a few kilometres, depending on the nature of the defect to distribute the sealing preparation within the interior of the tyre and to seal the defect. Thereafter the tyre may be fully inflated to its desired pressure.

The so-sealed tyre must be later removed from the rim in a car repair workshop or at a tyre fitters. A considerable proportion of the sprayed-in sealing preparation is present in a liquid form within the interior of the tyre and can run out from the rim during the removal of the tyre. The sealing preparation is sticky, unpleasant and also smells of ammonia and contains natural rubber latex. Contamination of the workshop with the sealing preparation thus should be avoided as far as possible. Accordingly, it is desirable to remove the sealing preparation from the tyre prior to removal of the tyre from the rim.

In the prior art it is known to fill tyres with liquid ballast which is water and usually an antifreeze and to remove the ballast when no longer required. US 3 986 520 shows a system for this using a pump and storage tank. However, such a system is not usable for tyre sealant.

The object of the present invention is to provided a method for removing puncture sealing preparations from tyres and to facilitate the positioning of the coaxial hose in the valve hole.

Accordingly the present invention provides a method of removing puncture sealant preparation from a tyre as set out in claim 1.

The sealing off of the intermediate space between the hose and the valve bore can be achieved by using a rubber cone pushed onto the hose.

For the simultaneous supply of the compressed air and the extraction of the sealing preparation, the coaxial hose is dipped through the valve bore into the sealing preparation in the tyre. The inner hose is connected to the container for the reception of the sealing preparation. The outer hose is connected to the pressure source. The sealing preparation is pressed out of the interior of the tyre, via the inner hose, into the container by the compressed air introduced into the tyre between the inner and outer hose.

The apparatus contains, in addition to a container provided with a vent opening and a pressure source, a coaxial plug connection and also a coaxial hose. In this plug connection the inner hose opens into the line to the container and the outer hose into the connection to the pressure source. Support ribs can be provided between the inner hose and the wall of the outer hose.

Before the tyre valve is removed, the tyre should be left to stand for a period of time on its tread with the valve in the six o'clock position and in a slightly inclined position in which the tyre side with the valve is somewhat higher than the side of the tyre remote from the valve. The free sealing preparation then collects during this time in the bottom of the tyre.

With full metal valves, the locking nut is removed and the valve is pushed into the tyre. With part metallic valves the valve is cut off above the rim with a knife and the remainder of the valve is pressed into the tyre, or the whole valve is removed with a dismantling lever. The hose is then introduced into the valve bore. The hose can be provided at the inserted end with a short metal tube in order to make the end heavier, and thus to guarantee that the hose end dips deeply into the sealing preparation.

The invention will be explained in more detail with reference to the drawings.
Figure 1 shows the invention in a schematic illustration;
Figure 2 shows the coaxial hose; and
Figure 3 shows a section through a coaxial plug connection.

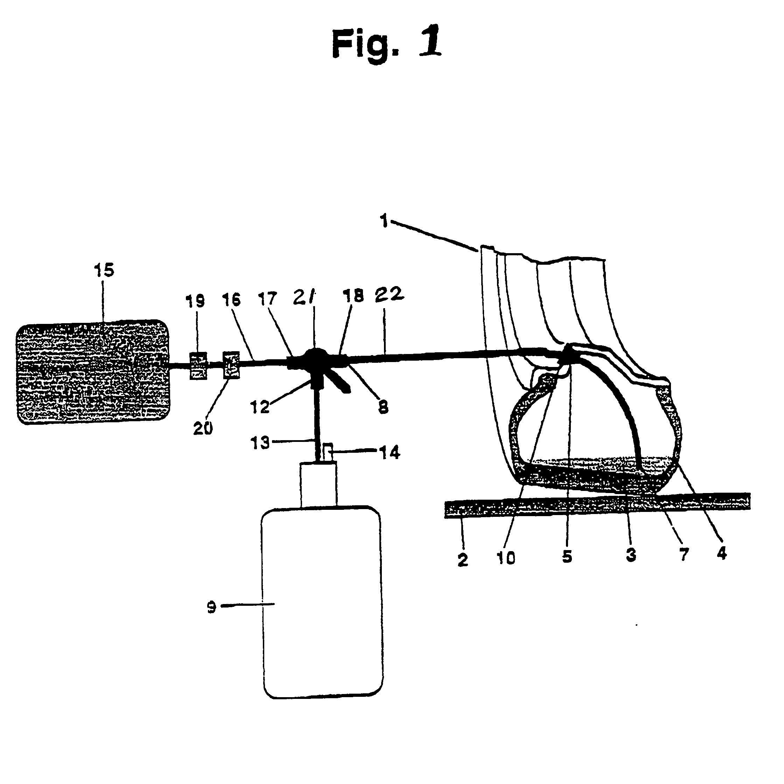

In Figure 1 a part of a cut-away tyre is shown. The tyre 1 is positioned with a slight inclination on a support 2 so that the sealing preparation 3 collects at the bottom of the tyre towards the wall 4 of the tyre remote from the valve. The tyre valve has already been removed in Figure 1. A coaxial hose 22 is introduced into the tyre via the valve bore 5 so that the hose end dips deeply into the sealing preparation 3.

The intermediate space between the hose 22 and the valve bore 5 is sealed off by a rubber cone 10 pushed onto the hose 6. The bottle 9 is provided with a vent opening 14. A compressor 15 is connected via a line 16 to the second input or connection 17 of a coaxial plug connection 21. The hose 22 is connected to the third input or connection 18 of the plug connection 21. Its end 7 dips into the sealing preparation 3 in the tyre 1.

A non-return valve 19 and a pressure relief valve 20 are arranged in the line 16.

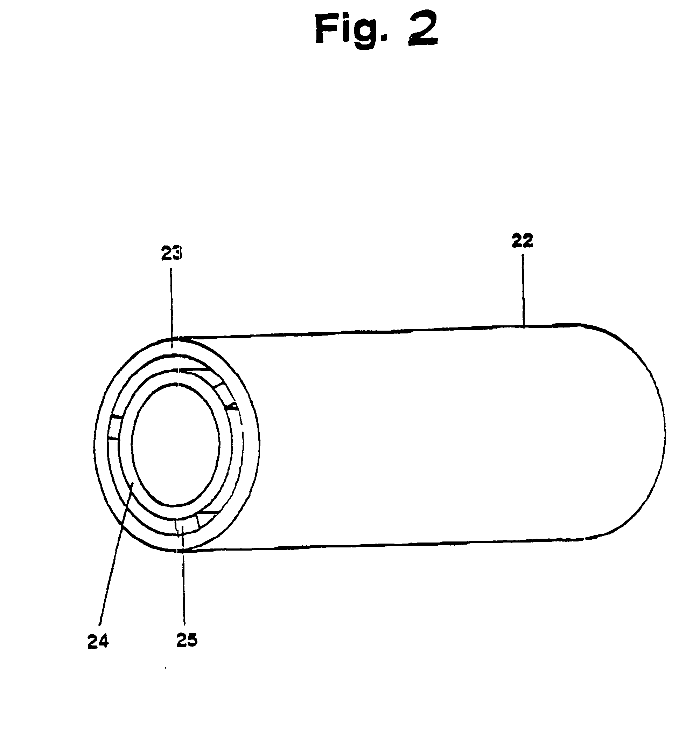

As can be seen in Figure 2 the coaxial hose 22 has an outer hose 23, an inner hose 24 and also support ribs 25 between the inner and outer hoses.

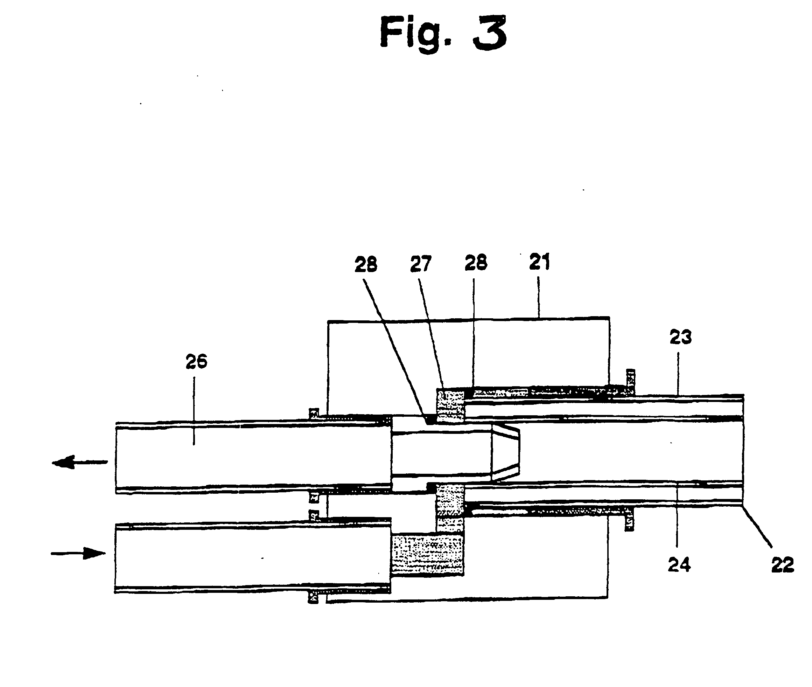

Figure 3 shows a coaxial plug connection 21 in which the coaxial fluid flows in the inner and outer hoses are transferred into two streams alongside one another.

The inner hose 24 opens into a line 26 at a telescope-like plug connection and the outer hose 23 opens into a ring-shaped passage 27 surrounding the line 26. Hose 13 shown in Figure 1 is connected to the line 26 while the line 16 is connected to the ring-like passage 27. The plug connection is sealed off by sealing rings 28.

The supply of compressed air into the tyre takes place at the same time as the removal of the sealing preparation 3. The compressed air is guided from the compressor 15 though the line 16, the outer hose 23 into the tyre 1. As soon as a slight overpressure is produced in the tyre 1, the sealing preparation 3 is pressed into the bottle 9 on the further supply of compressed air through the inner hose 24 and the hose 13.

A defoaming or anti-foaming agent, for example on a silicon basis, may be introduced into the tyre. The introduction of the anti-foaming agent takes place after the valve removal or prior to the intermediate space between the hose and the valve bore being sealing off.

## Claims

1. A method of removing puncture sealing preparation from a tyre, **characterised by** allowing air pressure to flow out of the tyre via, the valve, removing the tyre valve, introducing a coaxial hose (22) through the valve bore (5) into the tyre until the introduced hose end (7) dips deeply into the sealing preparation (3) contained in the tyre, sealing off the intermediate space between the hose (22) and the valve bore (5), connecting the annular space between the outer and inner hose to a pressure source (15) and connecting the inner hose to a container (9), generating an excess pressure in the tyre to press the sealing preparation (3) out of the tyre via the inner hose into the container.

2. A method in accordance with claim 1, **characterised by** sealing off the intermediate space between the hose (22) and the valve bore (5) by a rubber cone (10) pushed onto the hose.

3. A method in accordance with claim 1 or 2, **characterised by** firstly allowing the tyre to stand on its tread for a period of time with the valve (5) in approximately the six o'clock position.

## Patentansprüche

1. Verfahren zum Entfernen von Dichtmitteln aus einem Reifen, **dadurch gekennzeichnet, dass** Druckluft aus dem Reifen über das Ventil ausströmen gelassen wird, das Reifenventil entfernt wird, ein Koaxialschlauch (22) durch die Ventilbohrung (5) in den Reifen eingeführt wird, bis das eingeführte Schlauchende (7) tief in das in dem Reifen enthaltene Dichtmittel (3) eintaucht, der Zwischenraum zwischen dem Schlauch (22) und der Ventilbohrung (5) abgedichtet wird, der kreisringförmige Raum zwischen dem äußeren und dem inneren Schlauch an eine Druckquelle (15) angeschlossen wird und der innere Schlauch an einen Behälter (9) angeschlossen wird, in dem Reifen ein Überdruck erzeugt wird, um das Dichtmittel (3) aus dem Reifen heraus über den inneren Schlauch in den Behälter hinein zu pressen.

2. Verfahren nach Anspruch 1, **dadurch gekennzeichnet, dass** der Zwischenraum zwischen dem Schlauch (22) und der Ventilbohrung (5) durch einen auf den Schlauch geschobenen Gummikonus (10) abgedichtet wird.

3. Verfahren nach Anspruch 1 oder 2, **dadurch gekennzeichnet, dass** zunächst zugelassen wird, dass der Reifen über einen Zeitraum auf seiner Lauffläche steht, wobei das Ventil (5) sich etwa in der Sechs-Uhr-Stellung befindet.

## Revendications

1. Procédé permettant d'enlever, d'un pneumatique, une préparation d'étanchéité anti-crevaison, **caractérisé par** les opérations suivantes : permettre que la pression d'air s'échappe du pneumatique via la soupape, enlever la soupape du pneumatique, introduire un tube souple coaxial (22) dans le pneumatique via le trou de valve (5) jusqu'à ce que l'extrémité (7) introduite du tube souple plonge profondément dans la préparation d'étanchéité (3) qui est contenue dans le pneumatique, fermer de manière étanche l'espace intermédiaire formé entre le tube souple (22) et le trou de valve (5), raccorder l'espace annulaire présent entre le tube souple externe et le tube souple interne à une source de pression (15) et raccorder le tube souple interne à un conteneur (9), produire un excès de pression dans le pneumatique afin d'appliquer une force de pression sur la préparation d'étanchéité (3) faisant sortir cette dernière du pneumatique via le tube souple interne pour aller dans le conteneur.

2. Procédé selon la revendication 1, **caractérisé en ce que** l'opération de fermeture étanche de l'espace intermédiaire formé entre le tube souple (22) et le trou de valve (5) s'effectue au moyen d'un cône de caoutchouc (10) poussé sur le tube souple.

3. Procédé selon la revendication 1 ou 2, **caractérisé en ce qu'**on commence par laisser le pneumatique reposer sur sa bande de roulement pendant une certaine durée, la valve (5) étant approximativement à la position dite six heures.
